(19) Europäisches Patentamt
European Patent Office
Office européen des brevets

(11) Veröffentlichungsnummer: **0 036 536**
**B1**

# (12) EUROPÄISCHE PATENTSCHRIFT

(45) Veröffentlichungstag der Patentschrift: **22.02.84**

(51) Int. Cl.³: **C 08 F 10/00,** C 08 F 4/64

(21) Anmeldenummer: **81101666.6**

(22) Anmeldetag: **07.03.81**

(54) **Verfahren zum Herstellen von Homo- und Copolymerisaten von alpha-Monoolefinen.**

(30) Priorität: **15.03.80 DE 3010146**

(43) Veröffentlichungstag der Anmeldung: **30.09.81 Patentblatt 81/39**

(45) Bekanntmachung des Hinweises auf die Patenterteilung: **22.02.84 Patentblatt 84/8**

(84) Benannte Vertragsstaaten: **AT BE DE FR GB IT NL**

(56) Entgegenhaltungen:
**EP - A - 0 007 094**
**EP - A - 0 007 565**
**EP - A - 0 017 895**
**DE - A - 2 230 672**
**DE - A - 2 658 939**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Staiger, Gerhard, Dr., Virchowstrasse 26, D-6712 Bobenheim-Roxheim (DE)**
Erfinder: **Schweier, Guenther, Dr., Friedrich-Pietzsch-Strasse14, D-6701 Friedelsheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 036 536 B1

BUNDESDRUCKEREI BERLIN

## Verfahren zum Herstellen von Homo- und Copolymerisaten von α-Monoolefinen

Die vorliegende Erfindung liegt im Rahmen eines Verfahrens zum Herstellen von Homo- und Copolymerisaten von $C_2$- bis $C_6$-α-Monoolefinen bei Temperaturen von 20 bis 160, insbesondere 50 bis 120° C und Drücken von 1 bis 100, insbesondere 20 bis 70 bar mittels eines Ziegler-Natta-Katalysatorsystems aus

(1) einer modifizierten Titankomponente und
(2) einem Aluminiumalkyl der Formel

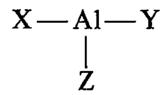

worin stehen

X sowie Y für eine nicht mehr als 8, insbesondere eine nicht mehr als 4 Kohlenstoffatome aufweisende Alkylgruppe,
Z für eine nicht mehr als 8 Kohlenstoffatome aufweisende Alkylgruppe oder Chlor, insbesondere eine nicht mehr als 4 Kohlenstoffatome aufweisende Alkylgruppe,

mit der Maßgabe, daß das Atomverhältnis Titan aus der modifizierten Titankomponente (1) : Aluminium aus dem Aluminiumalkyl (2) 1 : 0,1 bis 1 : 500, insbesondere 1 : 0,2 bis 1 : 200 beträgt.

Verfahren dieser Gattung sind in einer nahezu unübersehbaren Vielfalt bekannt; ihre Besonderheit liegt jeweils in der speziellen Ausgestaltung des Katalysatorsystems, wofür als typisches Beispiel die DE-OS 2 658 939 zitiert werden kann.

Die speziellen Ausgestaltungen des Katalysatorsystems werden vorgenommen, um bestimmte Ziele zu erreichen, z. B. die folgenden:

(A) Katalysatorsysteme, die bei der Polymerisation von α-Monoolefinen, wie insbesondere Propylen, zu Polymerisaten mit einem hohen Anteil an stereoregulärem (= isotaktischem) Polymerisat führen.
(B) Katalysatorsysteme, die eine erhöhte Ausbeute an Polymerisat zu liefern vermögen, nämlich Systeme mit einer erhöhten Produktivität, d. h. Systeme, bei denen die Menge an gebildetem Polymerisat pro Gewichtseinheit des Katalysatorsystems erhöht wird.
(C) Katalysatorsysteme, durch die weniger Halogen in das Polymerisat eingebracht werden — was zu erreichen ist, indem die Ausbeute gemäß (B) gesteigert wird und/oder ein Titanhalogenid eingesetzt wird, das möglichst wenig Halogen erhält.
(D) Katalysatorsysteme, deren Aktivitätsmaximum über eine möglichst lange Zeit konstant bzw. relativ konstant bleibt — was für die Katalysatorausbeuten von erheblicher Bedeutung ist.
(E) Katalysatorsysteme, die es erlauben, durch Erhöhung der Polymerisationstemperatur eine Umsatzsteigerung zu bewirken ohne signifikante Minderung der Stereoregularität der Polymerisate — ein Effekt, der generell erwünscht ist, insbesondere auch bei der Trockenphasenpolymerisation.
(F) Katalysatorsysteme, durch welche — insbesondere bei relativ hohen Polymerisationstemperaturen — die morphologischen Eigenschaften der Polymerisate in bestimmte Weise beeinflußt werden, etwa im Sinne einer einheitlichen Korngröße und/oder einer Verringerung der Feinstkornanteile und/oder eines hohen Schüttgewichtes und/oder einer guten Rieselfähigkeit — was z. B. für die technische Beherrschung der Polymerisationssysteme, die Aufarbeitung der Polymerisate und/oder die Verarbeitbarkeit der Polymerisate von Bedeutung sein kann.
(G) Katalysatorsysteme, die einfach und sicher herzustellen und gut handzuhaben sind — z. B. solche, die sich in (inerten) Kohlenwasserstoff-Hilfsmedien zubereiten lassen.
(H) Katalysatorsysteme, die es ermöglichen, bei der Polymerisation unter Einwirkung eines Molekulargewichtsreglers, wie insbesondere Wasserstoff, mit relativ geringen Mengen an Regler auszukommen — was z. B. für die Thermodynamik der Verfahrensführung von Bedeutung sein kann.
(I) Katalysatorsysteme, die auf spezielle Polymerisationsverfahren zugeschnitten sind — etwa solche, die z. B. entweder auf die spezifischen Besonderheiten der Suspensionspolymerisation oder auf die spezifischen Besonderheiten der Trockenphasenpolymerisation abgestimmt sind.
(J) Katalysatorsysteme, die zu Polymerisaten führen, deren Eigenschaftsspektrum sie für das eine oder das andere Anwendungsgebiet besonders geeignet macht.

Nach den bisherigen Erfahrungen gibt es unter den mannigfachen Zielen etliche Ziele, die man durch spezielle Ausgestaltungen des Katalysatorsystems nur dann erreichen kann, wenn man andere

Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen liegt auch die Aufgabenstellung der vorliegenden Erfindung: Eine neue Ausgestaltung eines Katalysatorsystems aufzuzeigen, mit der man gegenüber bekannten Ausgestaltungen — unter vergleichbarer Zielsetzung — bessere Ergebnisse erreichen kann, namentlich bessere Ergebnisse hinsichtlich des oben unter (F) aufgeführten Ziels bei zugleich möglichst geringer Zurücksetzung der unter (A) und (B) genannten Ziele.

Es wurde gefunden, daß die gestellte Aufgabe gelöst werden kann mit einem Katalysatorsystem der eingangs definierten Art, das (a) als eine weitere Komponente (3) einen bestimmten Ester und (b) als modifizierte Titankomponente (1) eine in drei Stufen in besonderer Weise aus speziellen Ausgangsstoffen hergestellte enthält.

Gegenstand der vorliegenden Erfindung ist dementsprechend ein Verfahren zum Herstellen von Homo- und Copolymerisaten von $C_2$- bis $C_6$-$\alpha$-Monoolefinen bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer modifizierten Titankomponente und
(2) einem Aluminiumalkyl der Formel

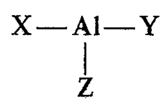

worin stehen

X sowie Y für eine nicht mehr als 8, insbesondere eine nicht mehr als 4 Kohlenstoffatome aufweisende Alkylgruppe,
Z für eine nicht mehr als 8 Kohlenstoffatome aufweisende Alkylgruppe oder Chlor, insbesondere eine nicht mehr als 4 Kohlenstoffatome aufweisende Alkylgruppe,

mit der Maßgabe, daß das Atomverhältnis Titan aus der modifizierten Titankomponente (1) : Aluminium aus dem Aluminiumalkyl (2) 1 : 0,1 bis 1 : 500, insbesondere 1 : 0,2 bis 1 : 200 beträgt. Das erfindungsgemäße Verfahren ist dadurch gekennzeichnet, (a) daß das Katalysatorsystem als weitere Komponente enthält

(3) eine Esterkomponente der Formel

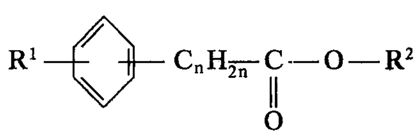

worin stehen

$R^1$ für eine $C_1$- bis $C_4$-Alkoxigruppe, eine $C_1$- bis $C_4$-Alkylgruppe oder Wasserstoff, vorzugsweise eine $C_1$- bis $C_4$-Alkoxigruppe oder eine $C_1$- bis $C_4$-Alkylgruppe, und insbesondere eine $C_1$- bis $C_4$-Alkoxigruppe,
$R^2$ für eine $C_1$- bis $C_4$-Alkylgruppe, insbesondere die Methyl- oder Äthylgruppe, und
n für eine ganze Zahl von 0 bis 3, insbesondere die Zahl 0

mit der Maßgabe, daß das Molverhältnis Aluminiumalkyl (2) : Esterkomponente (3) 10 : 8 bis 10 : 0,5, insbesondere 10 : 6 bis 10 : 1 beträgt und (b) daß die eingesetzte modifizierte Titankomponente (1) eine solche ist, die erhalten wird, indem man zunächst

(1.1) in einer ersten Stufe
(1.1.1) 100 Vol.-Teile Titantetrachlorid mit
(1.1.2) 1 bis 20, insbesondere 3 bis 10 Vol.-Teilen eines Benzolderivats der Formel

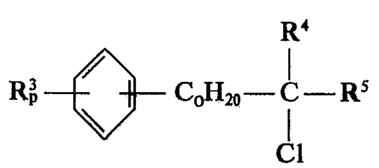

worin stehen

$R^3$ für Wasserstoff oder eine $C_1$- bis $C_4$-Alkylgruppe,
$R^4$ für Wasserstoff oder Chlor,
$R^5$ für Wasserstoff oder Chlor, insbesondere Chlor, oder
$R^4$ und $R^5$ gemeinsam für Sauerstoff,
o für eine ganze Zahl von 0 bis 3, insbesondere die Zahl 0, und
p für eine ganze Zahl von 0 bis 3, insbesondere die Zahl 0,

zusammenbringt und das Zusammengebrachte so lange auf einer Temperatur im Bereich von 30 bis 100, insbesondere 40 bis 70° C hält, bis es als homogene Flüssigkeit vorliegt, dann

(1.2) in einer zweiten Stufe
(1.2.1) die aus Stufe (1.1) resultierende Flüssigkeit mit
(1.2.2) einem einen Teilchendurchmesser von 0,05 bis 5,0, insbesondere 0,5 bis 3 mm aufweisenden Magnesiumalkoholat der Formel $Mg(OD)_2$, worin D steht für einen einwertigen $C_1$- bis $C_8$-Kohlenwasserstoffrest gesättigt-aliphatischer und/oder aromatischer Natur, vorzugsweise einen einwertigen $C_1$- bis $C_6$-Kohlenwasserstoffrest gesättigt-aliphatischer Natur, und insbesondere einen $C_2$- bis $C_4$-Alkylrest,
zusammenbringt, mit der Maßgabe, daß ein Molverhältnis Benzolderivat (1.1.2) aus Stufe (1.1) : Magnesiumalkoholat (1.2.2) von 1 : 12 bis 1 : 1, insbesondere 1 : 8 bis 1 : 3 gegeben ist, das Zusammengebrachte unter ständiger Durchmischung 0,2 bis 4, insbesondere 0,5 bis 2 Stunden auf einer Temperatur im Bereich von 40 bis 180, insbesondere 80 bis 140° C hält und den dabei resultierenden Feststoff unter Abtrennung der verbleibenden flüssigen Phase isoliert, und schließlich
(1.3) in einer dritten Stufe
(1.3.1) 100 Gewichtsteile Titantetrachlorid mit
(1.3.2) 0,2 bis 100, insbesondere 2 bis 60 Gewichtsteilen des aus Stufe (1.2) resultierenden Feststoffs sowie — gegebenenfalls und vorteilhafterweise — zusätzlich
(1.3.3) bis zu 15, insbesondere 1 bis 7 Gewichtsteilen eines Benzolderivats der unter (1.1.2) definierten Art
zusammenbringt, das Zusammengebrachte unter ständiger Durchmischung 0,1 bis 5, insbesondere 0,5 bis 2 Stunden auf einer Temperatur im Bereich von 40 bis 180, insbesondere 80 bis 140° C hält und den dabei resultierenden Feststoff — als die modifizierte Titankomponente (1) — unter Abtrennung der verbleibenden flüssigen Phase isoliert.

Zu dem erfindungsgemäßen Verfahren ist im einzelnen das Folgende zu bemerken:

Das Polymerisationsverfahren als solches kann — unter Beachtung der kennzeichnenden Besonderheit — in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren oder Trockenphasen-Polymerisationsverfahren. Die erwähnten technologischen Ausgestaltungen — mit anderen Worten: die technologischen Varianten der Polymerisation von $\alpha$-Monoolefinen nach Ziegler-Natta — sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z. B. mittels Reglern, wie insbesondere Wasserstoff.

Des weiteren ist noch festzuhalten, daß beim erfindungsgemäßen Verfahren die Komponenten des Katalysatorsystems in mannigfacher Weise in den Polymerisationsraum eingebracht werden können, z. B. (i) die modifizierte Titankomponente (1) als eine Komponente, das Aluminiumalkyl (2) sowie die Esterkomponente (3) als zwei weitere Komponenten alle örtlich gemeinsam, (ii) die gleichen drei Komponenten alle örtlich getrennt voneinander, (iii) die modifizierte Titankomponente (1) einerseits und ein Gemisch aus (2) und (3) andererseits örtlich getrennt voneinander — was insbesondere beim Trockenphasen-Polymerisationsverfahren von Vorteil sein kann — oder (iiii) ein Gemisch aus der modifizierten Titankomponente (1) und der Esterkomponente (3) einerseits und das Aluminiumalkyl (2) andererseits örtlich getrennt voneinander.

Schließlich ist darauf hinzuweisen, daß die vorteilhaften Eigenschaften des erfindungsgemäßen Verfahrens im allgemeinen besonders dann in Erscheinung treten, wenn es als Trockenphasen-Polymerisationsverfahren durchgeführt wird (für dessen Ausgestaltungen typische Beispiele etwa mit den DE-AS 1 217 071, 1 520 307 und 1 520 373 gegeben sind).

Was die stoffliche Seite des neuen Katalysatorsystems betrifft, ist im einzelnen das folgende zu sagen:

(1) Das zur Herstellung der modifizierten Titankomponente (1) einzusetzende Titantetrachlorid (1.1.1) und (1.3.1) sollte ein bei Ziegler-Natta-Katalysatorsystemen übliches sein.

Das gleichfalls einzusetzende Benzolderivat (1.1.2) bzw. — gegebenenfalls — (1.3.3) kann z. B. ein solches sein, in dessen Formel steht $R^3$ für Wasserstoff oder eine Methyl-, Äthyl-, n-Propyl-, i-Propyl-, n-Butyl-, i-Butyl- oder tert.-Butylgruppe. Typische Beispiele für gut geeignete Benzolderivate sind Benzoylchlorid, Benzotrichlorid und Benzalchlorid. Die Benzolderivate können eingesetzt werden als Einzelindividuen oder in Form von Gemischen aus zwei oder mehr Einzelindividuen; die in Stufe (1.1) und — gegebenenfalls — Stufe (1.3) einzusetzenden Benzolderivate können gleich oder verschieden sein.

Das zur Herstellung der modifizierten Titankomponente (1) ebenfalls einzusetzende Magnesiumalkoholat (1.2.2) kann ein übliches, der angegebenen Formel gehorchendes sein. Besonders geeignet sind die Alkoholate, die abgeleitet sind vom Äthyl-, n-Propyl-, i-Propyl, n-Butyl-, i-Butyl- oder tert.-Butylalkohol. Auch die Alkoholate können als Einzelindividuen oder in Form von Gemischen aus zwei oder mehr Einzelindividuen eingesetzt werden.

Die Herstellung der modifizierten Titankomponente (1) ist einfach und für den Fachmann ohne Erläuterungen möglich. Lediglich zu den Stufen (1.2) und (1.3) ist zu erwähnen, daß die Isolierung des jeweils resultierenden Feststoffs zweckmäßigerweise durch Absaugen, und die Abtrennung der jeweils verbleibenden flüssigen Phase zweckmäßigerweise durch Waschen mit einem flüssigen Kohlenwasserstoff — bis dieser kein Titantetrachlorid mehr aufnimmt — erfolgt. Der hierbei in Betracht kommende flüssige Kohlenwasserstoff kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird — z. B. bei der Polymerisation von α-Monoolefinen. Als Beispiele für geeignete Kohlenwasserstoffe seien genannt: Pentane, Hexane, Heptane, Benzine und Cyclohexan.

(2) Als Aluminiumalkyle (2) mit der angegebenen Formel kommen die einschlägig üblichen, dieser Formel gehorchenden in Betracht; sie sind aus Literatur und Praxis so wohlbekannt, daß auf sie nicht näher eingegangen zu werden braucht. Als herausragende Vertreter seien beispielsweise genannt Triäthylaluminium, Triisobutylaluminium sowie Tetraisobutylaloxan.

(3) Die das erfindungsgemäße Katalysatorsystem vervollständigende Esterkomponente (3) kann z. B. eine solche sein, in deren Formel stehen $R^1$ für eine Methoxy-, Äthoxy-, n-Propoxy-, i-Propoxy- oder n-Butoxygruppe, eine Methyl-, Äthyl-, n-Propyl-, i-Propyl-, n-Butyl-, i-Butyl- oder tert.-Butylgruppe oder Wasserstoff sowie $R^2$ für eine Methyl-, Äthyl-, n-Propyl-, i-Propyl-, n-Butyl-, i-Butyl- oder tert.-Butylgruppe. Typische Beispiele für gut geeignete Esterkomponenten sind die Anissäureester und insbesondere der p-Anissäuremethylester sowie p-Anissäureäthylester.

Das erfindungsgemäße Verfahren erlaubt es, Homo- und Copolymerisate — auch Block-Copolymerisate — von $C_2$- bis $C_6$-α-Monoolefinen in vorteilhafter Weise herzustellen, wobei besonders geeignete zu polymerisierende α-Monoolefine Propylen, Buten-1 und 4-Methylpenten-1, sowie — zur Copolymerisation — Äthylen sind.

Beispiel 1

Herstellen der modifizierten Titankomponente (1)

Es wird so verfahren, daß man zunächst

(1.1) in einer ersten Stufe
(1.1.1) 100 Vol.-Teile Titantetrachlorid mit
(1.1.2) 5,2 Vol.-Teilen Benzoylchlorid zusammenbringt und das Zusammengebrachte unter Rühren so lange auf einer Temperatur von etwa 50°C hält, bis es unter Auflösung eines anfänglichen Niederschlages, als homogene, gelbgefährbte, Flüssigkeit vorliegt; dann
(1.2) in einer zweiten Stufe
(1.2.1) die aus Stufe (1.1) resultierende Flüssigkeit mit
(1.2.2) einem, einen Teilchendurchmesser von 0,5 bis 3 mm aufweisenden Magnesiumäthylat zusammenbringt, mit der Maßgabe, daß ein Molverhältnis Benzolderivat (1.1.2) aus Stufen (1.1) : Magnesiumalkoholat (1.2.2) von 1 : 4 gegeben ist, das Zusammengebrachte unter ständigem Rühren auf eine Temperatur im Bereich von 130°C bis 135°C bringt und etwa 1 Stunde auf dieser Temperatur hält, worauf man den dabei resultierenden Feststoff unter Abtrennung der verbleibenden flüssigen Phase durch Absaugen mittels einer Glasfritte und Waschen mit n-Heptan bis zur Farblosigkeit der Waschflüssigkeit, isoliert, und schließlich
(1.3) in einer dritten Stufe
(1.3.1) 100 Gewichtsteile Titantetrachlorid mit
(1.3.2) 8 Gewichtsteilen des aus Stufe (1.2) resultierenden Feststoffs zusammenbringt, das Zusammengebrachte unter ständigem Rühren etwa 1 Stunde auf einer Temperatur im Bereich von 130 bis 135°C hält und den dabei resultierenden Feststoff — als die modifizierte Titankomponente (1) — unter Abtrennung der verbleibenden flüssigen Phase

durch Absaugen mittels einer Glasfritte und Waschen mit n-Heptan bis zur Farblosigkeit der Waschflüssigkeit, isoliert.

Polymerisation

Ein Rührgefäß wird mit 500 ml n-Heptan, 0,1 mMol, gerechnet als Titan, der oben beschriebenen modifizierten Titankomponente (1), 10 mMol Aluminiumtriäthyl als Aluminiumalkyl (2) sowie 2 mMol p-Anissäureäthylester als Esterkomponente (3) beschickt.

Die eigentliche Polymerisation wird unter ständigem Rühren bei 60°C während 3 Stunden durchgeführt mit Propylen als Monomer, dessen Druck während der Polymerisation konstant auf 1 bar gehalten wird.

Das Polymerisat wird hierbei mit einer Ergiebigkeit von 591 g Polypropylen pro g Titankomponente (1) erhalten; es weist 7,0% in siedendem n-Heptan löslicher Anteile (»Heptanlösliches«) auf.

Beispiel 2

Es wird genauso verfahren wie in Beispiel 1, mit den einzigen Unterschieden, daß beim Herstellen der modifizierten Titankomponente (1) in Stufe (1.1) als Benzolderivat (1.1.2) nicht Benzoylchlorid, sondern die gleiche Menge Benzotrichlorid eingesetzt wird und daß in der zweiten Stufe (1.2) ein Molverhältnis Benzolderivat (1.1.2) aus Stufe (1.1) : Magnesiumalkoholat (1.2.2) von 1 : 6 gegeben ist.

Hierbei wird das Polymerisat mit einer Ergiebigkeit von 884 g/g erhalten; es weist 8,4% Heptanlösliches auf.

Beispiel 3

Herstellen der modifizierten Titankomponente (1)

Es wird so verfahren, daß man zunächst

(1.1) in einer ersten Stufe
(1.1.1) 100 Vol.-Teile Titantetrachlorid mit
(1.1.2) 5,2 Vol.-Teilen Benzoylchlorid
zusammenbringt und das Zusammengebrachte unter Rühren so lange auf einer Temperatur von etwa 50°C hält, bis es unter Auflösung eines anfänglichen Niederschlags, als homogene, gelbgefärbte, Flüssigkeit vorliegt; dann
(1.2) in einer zweiten Stufe
(1.2.1) die aus Stufe (1.1) resultierende Flüssigkeit mit
(1.2.2) einen, einen Teilchendurchmesser von 0,5 bis 3 mm aufweisenden Magnesiumäthylat
zusammenbringt, mit der Maßgabe, daß ein Molverhältnis Benzolderivat (1.1.2) aus Stufe (1.1) : Magnesiumalkoholat (1.2.2) von 1 : 4 gegeben ist, das Zusammengebrachte unter ständigem Rühren auf eine Temperatur im Bereich von 130° bis 135°C bringt und etwa 1 Stunde auf dieser Temperatur hält, worauf man den dabei resultierenden Feststoff unter Abtrennung der verbleibenden flüssigen Phase durch Absaugen mittels einer Glasfritte und Waschen mit n-Heptan bis zur Farblosigkeit der Waschflüssigkeit, isoliert, und schließlich
(1.3) in einer dritten Stufe
(1.3.1) 100 Gewichtsteile Titantetrachlorid mit
(1.3.2) 8 Gewichtsteile des aus Stufe (1.2) resultierenden Feststoffs sowie zusätzlich
(1.3.3) 2,03 Gewichtsteile Benzoylchlorid
zusammenbringt, das Zusammengebrachte unter ständigem Rühren etwa 1 Stunde auf einer Temperatur im Bereich von 130 bis 135°C hält und den dabei resultierenden Feststoff — als die modifizierte Titankomponente (1) — unter Abtrennung der verbleibenden flüssigen Phase durch Absaugen mittels einer Glasfritte und Waschen mit n-Heptan bis zur Farblosigkeit der Waschflüssigkeit, isoliert.

Polymerisation

Ein Rührgefäß wird mit 500 ml n-Heptan, 0,1 mMol, gerechnet als Titan, der oben beschrieben modifizierten Titankomponente (1), 10 mMol Aluminiumtriäthyl als Aluminiumalkyl (2) sowie 2 mMol p-Anissäureäthylester als Esterkomponente (3) beschickt.

Die eigentliche Polymerisation wird unter ständigem Rühren bei 60°C während 3 Stunden durchgeführt mit Propylen als Monomer, dessen Druck während der Polymerisation konstant auf 1 bar

gehalten wird.

Das Polymerisat wird hierbei mit einer Ergiebigkeit von 662 g Polypropylen pro g Titankomponente (1) erhalten; es weist 5,3% in siedendem n-Heptan löslicher Anteile (»Heptanlösliches«) auf.

### Beispiel 4

Es wird genauso verfahren wie in Beispiel 3, mit den einzigen Unterschieden, daß beim Herstellen der modifizierten Titankomponente (1) sowohl in Stufe (1.1) als auch in Stufe (1.3) als Benzolderivate (1.1.2) bzw. (1.3.3) nicht Benzoylchlorid, sondern Benzotrichlorid eingesetzt wird – in Stufe (1.1) in einer Menge von 5,2 Vol.-Teilen, in Stufe (1.3) in einer Menge von 1,88 Gewichtsteilen – und daß in der zweiten Stufe (1.2) ein Molverhältnis Benzolderivat (1.1.2) aus Stufe (1.1) : Magnesiumalkoholat (1.2.2) von 1 : 6 gegeben ist.

Hierbei wird das Polymerisat mit einer Ergiebigkeit von 992 g/g erhalten; es weist 9,6% Heptanlösliches auf.

## Patentanspruch

Verfahren zum Herstellen von Homo- und Copolymerisaten von $C_2$- bis $C_6$-$\alpha$-Monoolefinen bei Temperaturen von 20 bis 160° C und Drücken von 1 bis 100 bar mittels eines Ziegler-Natta-Katalysatorsystems aus

(1) einer modifizierten Titankomponente und
(2) einem Aluminiumalkyl der Formel

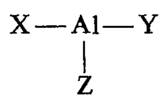

worin stehen

X sowie Y für eine nicht mehr als 8 Kohlenstoffatome aufweisende Alkylgruppe,
Z für eine nicht mehr als 8 Kohlenstoffatome aufweisende Alkylengruppe oder Chlor,

mit der Maßgabe, daß das Atomverhältnis Titan aus der modifizierten Titankomponente (1) : Aluminium aus dem Aluminiumalkyl (2) 1 : 0,1 bis 1 : 500 beträgt, dadurch gekennzeichnet, (a) daß das Katalysatorsystem als weitere Komponente enthält

(3) eine Esterkomponente der Formel

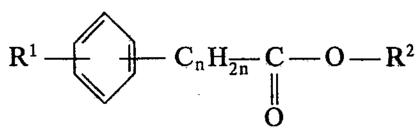

worin stehen

$R^1$ für eine $C_1$- bis $C_4$-Alkoxigruppe, eine $C_1$- bis $C_4$-Alkylgruppe oder Wasserstoff,
$R^2$ für eine $C_1$- bis $C_4$-Alkylgruppe,
n für eine ganze Zahl von 0 bis 3,

mit der Maßgabe, daß das Molverhältnis Aluminiumalkyl (2) : Esterkomponente (3) 10 : 8 bis 10 : 0,5 beträgt und (b), daß die eingesetzte modifizierte Titankomponente (1) eine solche ist, die erhalten wird, indem man zunächst

(1.1) in einer ersten Stufe
(1.1.1) 100 Vol.-Teile Titantetrachlorid mit
(1.1.2) 1 bis 20 Vol.-Teilen eines Benzolderivats der Formel

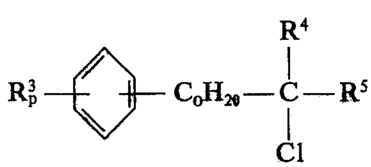

worin stehen

$R^3$ für Wasserstoff oder eine $C_1$- bis $C_4$-Alkylgruppe,
$R^4$ für Wasserstoff oder Chlor,
$R^5$ für Wasserstoff oder Chlor, oder
$R^4$ und $R^5$ gemeinsam für Sauerstoff,
o für eine ganze Zahl von 0 bis 3, und
p für eine ganze Zahl von 0 bis 3,

zusammenbringt und das Zusammengebrachte so lange auf einer Temperatur im Bereich von 30 bis 100° C hält, bis es als homogene Flüssigkeit vorliegt; dann

(1.2) in einer zweiten Stufe
(1.2.1) die aus Stufe (1.1) resultierende Flüssigkeit mit
(1.2.2) einem, einen Teilchendurchmesser von 0,05 bis 5,0 mm aufweisenden Magnesiumalkoholat der Formel $Mg(OD)_2$, worin D steht für einen einwertigen $C_1$- bis $C_8$-Kohlenwasserstoffrest gesättigt-aliphatischer und/oder aromatischer Natur,
zusammenbringt, mit der Maßgabe, daß ein Molverhältnis Benzolderivat (1.1.2) aus Stufe (1.1) : Magnesiumalkoholat (1.2.2) von 1 : 12 bis 1 : 1 gegeben ist, das Zusammengebrachte unter ständiger Durchmischung 0,2 bis 4 Stunden auf einer Temperatur im Bereich von 40 bis 180° C hält und den dabei resultierenden Feststoff unter Abtrennung der verbleibenden flüssigen Phase isoliert, und schließlich
(1.3) in einer dritten Stufe
(1.3.1) 100 Gewichtsteile Titantetrachlorid mit
(1.3.2) 0,2 bis 100 Gewichtsteile des aus Stufe (1.2) resultierenden Feststoffs sowie — gegebenenfalls — zusätzlich
(1.3.3) bis zu 15 Gewichtsteilen eines Benzolderivats der unter (1.1.2) definierten Art
zusammenbringt, das Zusammengebrachte unter ständiger Durchmischung 0,1 bis 5 Stunden auf einer Temperatur im Bereich von 40 bis 180° C hält und den dabei resultierenden Feststoff — als die modifizierte Titankomponente (1) — unter Abtrennung der verbleibenden flüssigen Phase isoliert.

**Claim**

A process for the preparation of homopolymers and copolymers of $C_2 - C_6$-$\alpha$-monoolefins at from 20 to 160° C under a pressure of from 1 to 100 bar by means of a Ziegler-Natta catalyst system comprising

(1) a modified titanium component and
(2) an aluminium alkyl of the formula

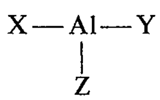

where

X and Y are alkyl of not more than 8 carbon atoms and
Z is alkyl of not more than 8 carbon atoms or chlorine,

with the proviso that the atomic ratio of titanium from the modified titanium component (1) to aluminium from the aluminium alkyl (2) is from 1 : 0.1 to 1 : 500, wherein (a) the catalyst system contains, as a further component,

(3) an ester component of the formula

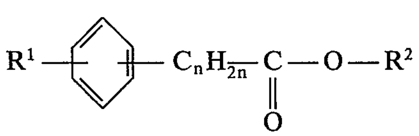

where

$R^1$ is $C_1 - C_4$-alkoxy, $C_1 - C_4$-alkyl or hydrogen,
$R^2$ is $C_1 - C_4$-alkyl, and
n is an integer from 0 to 3,

with the proviso that the molar ratio of aluminium alkyl (2) to ester component (3) is from 10 : 8 to 10 : 0.5, and (b) the modified titanium component (1) empolyed is a component which is obtained by a method wherein first of all

(1.1) in a first stage,
(1.1.1) 100 parts by volume of titanium tetrachloride are brought together with
(1.1.2) from 1 to 20 parts by volume of a benzene derivative of the formula

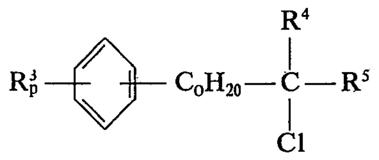

where

$R^3$ is hydrogen or $C_1-C_4$-alkyl,
$R^4$ is hydrogen or chlorine,
$R^5$ is hydrogen or chlorine, or
$R^4$ and $R^5$ together are oxygen,
o is an integer from 0 to 3, and
p is an integer from 0 to 3,

and the mixture is kept at from 30 to 100°C until it is in the form of a homogeneous liquid, thereafter

(1.2) in a second stage,
(1.2.1) the liquid resulting from stage (1.1) is brought together with
(1.2.2) a magnesium alcoholate in the form of particles having a diameter of from 0.05 to 5.0 mm, and having the formula $Mg(OD)_2$, where D is a monovalent $C_1-C_8$-hydrocarbon radical of saturated aliphatic character and/or aromatic character,
with the proviso that the molar ratio of benzene derivative (1.1.2) from stage (1.1) to magnesium alcoholate (1.2.2) is from 1 : 12 to 1 : 1, the mixture is kept, with constant mixing, at from 40 to 180°C, for from 0.2 to 4 hours, and the resulting solid is isolated, with the removal of the residual liquid phase, and finally
(1.3) in a third stage,
(1.3.1) 100 parts by weight of titanium tetrachloride are brought together with
(1.3.2) from 0.2 to 100 parts by weight of the solid resulting from stage (1.2), with or without
(1.3.3) up to 15 parts by weight of a benzene derivative of the type defined under (1.1.2),
the mixture is kept, with constant mixing, at from 40 to 180°C for from 0.1 to 5 hours, and the resulting solid, constituting the modified titanium component (1), is isolated, with the removal of the residual liquid phase.

**Revendication**

Procédé de préparation d'homo- et de co-polymères d'$\alpha$-mono-oléfines en $C_2$ à $C_6$, à des températures de 20 à 160°C et sous des pressions de 1 à 100 bars, à l'aide d'un système catalytique selon Ziegler-Natta, constitué de

(1) une composante au titane modifiée et
(2) un alkyl-aluminium de la formule

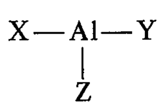

où

X et Y représentent chacun un groupe alkyle, dont le nombre d'atomes de carbone ne dépasse pas 8 et
Z désigne un groupe alkyle, dont le nombre d'atomes de carbone ne dépasse pas 8 ou un atome de chlore,

et dans lequel le rapport atomique du titane de la composante au titane modifiée (1) à l'aluminium de

l'alkyl-aluminium (2) est compris entre 1 : 0,1 et 1 : 500, caractérisé en ce que: (a) le système catalytique contient comme composante supplémentaire

(3) une composante ester de la formule

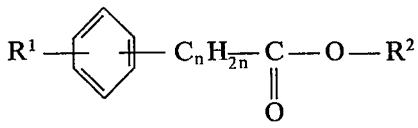

dans laquelle

$R^1$ représente un groupe alcoxy en $C_1$ à $C_4$, un groupe alkyle en $C_1$ à $C_4$ ou un atome d'hydrogène,
$R^2$ désigne un groupe alkyle en $C_1$ à $C_4$ et
n est un nombre entier valant 0 à 3,

le rapport molaire de l'alkyl-aluminium (2) à la composante ester (3) étant compris entre 10 : 8 et 10 : 0,5; et (b) la composante au titane modifiée employée a été préparée de la façon ci-après:

(1.1) dans un premier stade, on mélange
(1.1.1) 100 parties en volume de tétrachlorure de titane et
(1.1.2) 1 à 20 parties en volume d'un dérivé benzénique de la formule

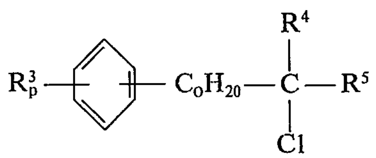

dans laquelle

$R^3$ désigne un atome d'hydrogène ou un radical alkyle en $C_1$ à $C_4$,
$R^4$ un atome d'hydrogène ou de chlore,
$R^5$ un atome d'hydrogène ou de chlore ou
$R^4 + R^5$ = un atome d'oxygène,
o est un nombre entier valant 0 à 3 et
p est un nombre entier valant 0 à 3,

et on maintient ce mélange à une température dans la gamme de 30 à 100°C jusqu'à l'obtention d'un liquide homogène;

(1.2) dans un deuxième stade, on mélange
(1.2.1) le liquide obtenu dans le stade (1.1) et
(1.2.2) un alcoolate de magnésium de la formule $Mg(OD)_2$, où D désigne un reste hydrocarboné monovalent en $C_1$ à $C_8$ de nature saturée-aliphatique et(ou) aromatique, d'une granulométrie comprise entre 0,05 et 5,0 mm,
en des proportions telles que le rapport molaire du dérivé benzénique (1.1.2) du stade (1.1) à l'alcoolate de magnésium (1.2.2) est compris entre 1 : 12 et 1 : 1, on maintient ce mélange pendant 0,2 à 4 heures, sous une agitation permanente, à une température comprise dans la gamme de 40 à 180°C, puis on isole la matière solide formée avec élimination de la phase liquide résiduelle, et
(1.3) dans un troisème stade, on mélange
(1.3.1) 100 parties en poids de tétrachlorure de titane,
(1.3.2) 0,2 à 100 parties en poids de la matière solide obtenue au stade (1.2) et éventuellement
(1.3.3) jusqu'à 15 parties en poids d'un dérivé benzénique tel que défini sub (1.1.2),
on maintient ce mélange pendant 0,1 à 5 heures, sous une agitation permanente, à une température comprise dans la gamme de 40 à 180°C, puis on isole par élimination de la phase liquide résiduelle la matière solide formée, qui constitue la composante au titane modifiée (1).